# EUROPÄISCHE PATENTSCHRIFT

(11) **EP 1 797 939 B1**
(45) Veröffentlichungstag und Bekanntmachung des Hinweises auf die Patenterteilung: **10.04.2013**
(21) Anmeldenummer: 06125395.1
(22) Anmeldetag: 05.12.2006
(51) Int. Cl.: B01D 46/24, B01D 46/52, F02M 35/024

(54) **Filtereinrichtung zur Luftfilterung in Brennkraftmaschinen**
Filtering device for air filtering in combustion engines
Dispositif de filtration pour filtrer l'air de moteurs à combustion

(30) Priorität: 14.12.2005 DE 202005019666 U
(43) Veröffentlichungstag der Anmeldung: 20.06.2007
(73) Patentinhaber: MANN+HUMMEL GmbH, 71638 Ludwigsburg (DE)
(72) Erfinder: Walz, Stefan, 71691, Freiberg a. N. (DE); Trautmann, Dr. Pius, 70499, Stuttgart (DE); Pelz, Andreas, 70806, Kornwestheim (DE); Eisengräber-Pabst, Jobst, 71726, Benningen a. N. (DE)

(56) Entgegenhaltungen:
- EP-A1- 0 917 901
- DE-A1- 19 509 825
- DE-A1- 19 810 633
- GB-A- 909 893
- US-A- 3 399 516
- US-A- 4 279 630
- US-A- 5 800 586
- US-A- 5 814 219
- US-A1- 3 399 516
- US-A1- 5 800 586
- US-A1- 2002 129 711
- US-A1- 2003 150 199

## Beschreibung

Die Erfindung bezieht sich auf eine Filtereinrichtung zur Luftfilterung in Brennkraftmaschinen nach dem Oberbegriff des Anspruches 1.

Bekannt sind Filtereinrichtungen, die zur Luftfilterung in Brennkraftmaschinen am Lufteinlass des Ansaugtraktes angeordnet sind und die angesaugte Verbrennungsluft einer Filterung unterziehen. Diese Filtereinrichtungen weisen in einem Filtergehäuse ein Filterelement auf, welches beispielsweise als gefaltetes Kunststoffvlies oder Papiermedium ausgebildet ist, das von der zu reinigenden Luft durchströmt wird. Eine derartige Filtereinrichtung wird in der EP 0 450 299 A1 beschrieben.
Aus der GB 909 893 A ist eine Filtereinrichtung zur Luftfilterung in Brennkraftmaschinen bekannt mit einem Hauptfilterelement und ein dem Hauptfilterelement in Strömungsrichtung vorgeschaltetem Vorfilter. Der Vorfilter wird als ein Vlies oder ein Schaum aus nicht entflammbarem synthetischen Kunststoff beschreiben.
Die US 20020129711A zeigt einen Luftfilter mit einem Luftfilterelement und einem in Strömungsrichtung nachgeschalteten mehrschichtig aufgebauten Adsorptionsfilter, wobei für eine Lage des Adsorptionsfilters ein flammbeständige Fasern, beispielsweise Kohlenstofffasern vorgeschlagen werden.

Darüber hinaus ist es bekannt, das Filterelement im Luftfilter mit einem flammhemmenden Filtermedium zu versehen, dessen flammhemmende Wirkung durch den Einsatz spezieller Imprägnierungen erzielt wird. Derartige flammhemmende Komponenten werden beispielsweise auf der Basis von Phosphor, Antimon oder Brom hergestellt und sollen ein versehentliches Entzünden des an sich leicht entflammbaren Filterelementes verhindern. Nachteilig ist hierbei jedoch, dass die flammhemmende Imprägnierung die Staubspeicherfähigkeit des Filterelementes herabsetzen kann, so dass zum Erreichen der geforderten Filtrationsleistung die anzuströmende Fläche des Filterelementes erhöht werden muss.

Ein weiterer Nachteil liegt darin, dass die Wasserstabilität des Filterelementes durch den Einsatz der flammhemmenden Imprägnierung reduziert wird. Eine hohe Wasserstabilität ist aber erforderlich, da im Falle eines Wassereintrages in den Ansaugtrakt des Motors gewährleistet sein muss, dass das Filterelement weiterhin seine Funktion erfüllt.

Der Erfindung liegt die Aufgabe zugrunde, mit einfachen konstruktiven Maßnahmen eine Filtereinrichtung zur Luftfilterung in Brennkraftmaschinen zu schaffen, die sich durch eine gute Staubspeicherfähigkeit, eine hohe Wasserstabilität sowie eine gute Flammhemmung auszeichnet.

Diese Aufgabe wird erfindungsgemäß mit den Merkmalen des Anspruches 1 gelöst. Die Unteransprüche geben zweckmäßige Weiterbildungen an.

Bei der erfindungsgemäßen Filtereinrichtung besteht der in das Filtergehäuse einsetzbare Filter aus einem Hauptfilterelement sowie aus einem Vorvlies, das dem Hauptfilterelement in Strömungsrichtung vorgeschaltet ist. Die flammhemmende Wirkung wird durch das Vorvlies erreicht. Diese Ausführung bietet den Vorteil, dass die flammhemmenden oder gegebenenfalls auch flammschützenden Eigenschaften vom Hauptfilterelement auf das Vorvlies verlagert werden, so dass das Hauptfilterelement im Hinblick auf seine Filtriereigenschaften optimiert werden kann. So kann gemäß einer vorteilhaften Ausführung die flammhemmende Wirkung ausschließlich durch das Vorvlies erbracht werden, so dass das Hauptfilterelement frei von der flammhemmenden Imprägnierung bleibt. Gegebenenfalls kann es aber auch zweckmäßig sein, zusätzlich zum Vorvlies auch das Hauptfilterelement mit einer flammhemmenden Ausrüstung zu versehen.

Des Weiteren ist eine hohe Wasserstabilität des Hauptfilterelementes gewährleistet. Da die flammhemmende Ausrüstung am Hauptfilterelement wegfällt bzw. eine geringere Imprägnierschicht im Falle von Papierfiltern ausreicht, wird auch die Wasserstabilität des Hauptfilterelementes nicht oder nur geringfügig reduziert. Bei einem Wassereintrag in die Zuluftleitung des Motors ist daher gewährleistet, dass das Hauptfilterelement weiterhin seine Funktion erfüllt.

Schließlich ist auch eine hohe Staubspeicherfähigkeit gewährleistet. Zum einen kommt bereits dem Vorvlies eine zusätzliche Staubkapazität zu, die sich zu derjenigen des Hauptfilterelements addiert. Zum anderen bleibt die volle Staubspeicherfähigkeit des Hauptfilterelementes erhalten, da dieses nicht oder nur geringfügig mit der flammhemmenden Wirkung versehen wird.

In der erfindungsgemäßen Ausführung ist vorgesehen, dass das Vorvlies synthetisches Fasermaterial umfasst, insbesondere einen polymeren Werkstoff wie z.B. Polyester, Polyamid oder Polypropylen. In dieses synthetische Fasermaterial sind homogen im Vlies verteilte unbrennbare Fasern eingebracht, wobei der Anteil dieser unbrennbaren Fasern am Gesamtgewicht des Fasermaterials des Vorvlieses bevorzugt zwischen 5 % und 100 % und insbesondere zwischen 25 % und 50 % liegt. Eine derartige unbrennbare Faser ist eine oxidierte Polyacrylnitril-Faser (Panox), welche auch bei hohen Temperaturen bis ca. 700 °C nicht verbrennt oder verschmilzt. Die unbrennbaren Fasern verbleiben auf dem Hauptfilterelement, auch wenn die übrigen Fasern des Vorvlieses verbrannt oder verschmolzen sind. Hierbei verfügen die unbrennbaren Fasern über eine ausreichende Eigensteifigkeit, so dass der Kontakt eines Entzündungskörpers, wie z. B. eine Zigarettenkippe, mit dem Hauptfilterelement verhindert wird.

Das Hauptfilterelement, das zweckmäßig aus synthetischen Fasern oder Zellulose besteht bzw. Zellulosefasern umfasst, ist vorteilhaft in Form eines Faltenfilters bzw. Faltenbalges ausgeführt. Das Vorvlies kann mit den Faltenspitzen des Faltenfilters verbunden werden, wodurch ein leicht zu montierender und austauschbarer Verbund der beiden Filterelemente erreicht wird.

Bei anderen Ausgestaltungen kann das Vorvlies auch lose um das Hauptfilterelement gelegt sein und keine Verbindungsstellen zu dem Hauptfilterelement aufweisen. Um einen einfachen Austausch des Elementes zu erreichen, kann das Vorvlies über ein Dichtungselement mit dem Hauptfilterelement verbunden sein.

Mithilfe der erfindungsgemäßen Einrichtung kann die Standzeit des Filters erhöht werden. Auch bei Verwendung eines Papierfaltenfilters für das Hauptfilterelement kann eine flammhemmende Wirkung ohne Beeinträchtigung der Filterleistung dadurch erzielt werden, dass das Vorvlies flammhemmend ausgebildet wird. Hierdurch reduzieren sich auch die Herstellungskosten für das Hauptfilterelement, da dieses lediglich feuchtigkeitsabweisend imprägniert werden muss, aber nicht mehr zwangsläufig auch flammhemmend.

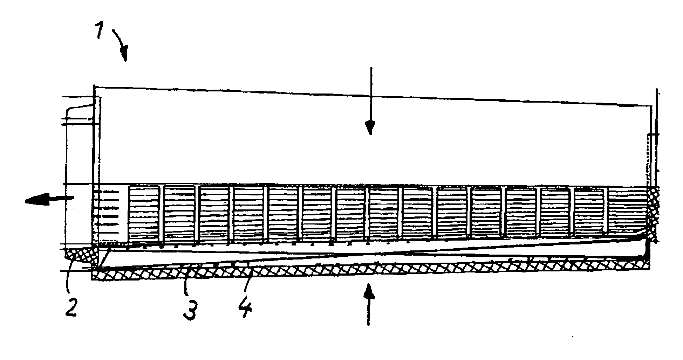

Weitere Vorteile und zweckmäßige Ausführungen sind den weiteren Ansprüchen, der Figurenbeschreibung und der Zeichnung zu entnehmen, in der eine Filtereinrichtung zur Luftfilterung in Brennkraftmaschinen im Schnitt dargestellt ist.

Die in der Figur im Halbschnitt dargestellte Filtereinrichtung 1 wird zur Luftfilterung in Brennkraftmaschinen eingesetzt und befindet sich dort im Lufteinlass des Ansaugtraktes. Die angesaugte Verbrennungsluft wird in Pfeilrichtung durch die Filtereinrichtung 1 geleitet und in dieser von Schmutzpartikeln gereinigt. Die Filtereinrichtung 1 ist ein kombiniertes Filterelement, welches über ein Hauptfilterelement 3 sowie ein in Strömungsrichtung vorgeschaltetes Vorvlies 4 verfügt. Das Hauptfilterelement 3 und das Vorvlies 4 sind an ihrer Stirnseite dichtend und unlösbar mit einer Dichtung 2 verbunden, welche die Filtereinrichtung 1 gegenüber einem Filtergehäuse (nicht dargestellt) abdichtet. Das Hauptfilterelement 3 ist als ringförmig geschlossener Faltenfilter bzw. Faltenbalg ausgeführt und besteht vorteilhaft aus Filterpapier bzw. Zellulose. Auf der Rohseite des Hauptfilterelementes 3 befindet sich das Vorvlies 4, das als Filtermatte ausgebildet ist und zweckmäßig aus synthetischem Fasermaterial besteht.

Als synthetisches Fasermaterial für das Vorvlies kann ein polymerer Werkstoff gewählt werden, beispielsweise Polyester (PES), Polyethylen (PE), Polypropylen (PP), Polycarbonat (PC), Polyamid (PA), Acrylnitril-Butadien-Styrol-Copolymerisat (ABS) oder Polystyrol (PS).

In das synthetische Fasermaterial des Vorvlieses 4 können nicht schmelzbare, unbrennbare Fasern eingebracht werden, die vorzugsweise einen Gewichtsanteil am Gesamtgewicht des Fasermaterials zwischen 5 % und 100 % einnehmen, wobei insbesondere ein Anteil von 25 % bis 50 % gewählt wird. Das Flächengewicht des Fasermaterials liegt vorteilhaft zwischen 50 g/m² und 500 g/m², vorzugsweise zwischen 100 g/m² und 200 g/m². Zusätzlich zu den nicht schmelzbaren, unbrennbaren Eigenschaften weist das Fasermaterial des Vorvlieses auch wasserabweisende, zumindest aber wasserableitende Eigenschaften auf. Darüber hinaus besitzt das Vorvlies 4 auch Filtereigenschaften, wodurch die gesamte Filtrationsleistung wie zum Beispiel Schmutzkapazität und Abscheidegrad der Filtereinrichtung 1 erhöht wird. Außerdem dient das Vorvlies zum mechanischen Schutz des Hauptfilterelementes 3. Des Weiteren dient das Vorvlies dazu, dass der Faltenbalg gleichmäßiger angeströmt wird.

Hauptfilterelement 3 und Vorvlies 4 können miteinander verbunden sein, insbesondere in der Weise, dass die Faltenspitzen des faltenförmigen Hauptfilterelementes 3 mit der zugewandten Seite des Vorvlieses 4 verbunden werden. Eine derartige Verbindung kann beispielsweise in thermischer Weise dadurch erfolgen, dass das Kunststoffmaterial des Vorvlieses durch Anwärmen aufgeweicht und die Faltenspitzen in die aufgeweichte Seite eingedrückt werden.

Das Vorvlies kann mithilfe einer hierfür geeigneten Substanz fixiert werden, insbesondere mit einem Reaktionsklebstoff oder einem Hotmelt oder dergleichen.

## Patentansprüche

1. Filtereinrichtung zur Luftfilterung in Brennkraftmaschinen, mit einem in ein Filtergehäuse einsetzbaren, flammhemmenden Filter, wobei der Filter ein Hauptfilterelement (3) und ein dem Hauptfilterelement (3) in Strömungsrichtung vorgeschaltetes Vorvlies (4) umfasst, wobei die flammhemmende Wirkung durch das Vorvlies (4) erreicht wird, **dadurch gekennzeichnet, dass** das Vorvlies synthetisches Fasermaterial umfasst, wobei in dieses synthetische Fasermaterial homogen im Vlies verteilte unbrennbare oxidierte Polyacrylnitril-Faser (Panox) eingebracht sind.

2. Filtereinrichtung nach Anspruch 1, **dadurch gekennzeichnet, dass** auf das Vorvlies (4) eine flammhemmende Imprägnierung aufgebracht ist.

3. Filtereinrichtung nach Anspruch 2, **dadurch gekennzeichnet, dass** die flammhemmende Imprägnierung ausschließlich auf das Vorvlies (4) aufgebracht ist.

4. Filtereinrichtung nach einem der Ansprüche 1 bis 3, **dadurch gekennzeichnet, dass** das Vorvlies (4) ein Flächengewicht zwischen 50 g/m² und 500 g/m² aufweist, insbesondere ein Flächengewicht zwischen 100 g/m² und 200 g/m²,

5. Filtereinrichtung nach einem der Ansprüche 1 bis 4, **dadurch gekennzeichnet, dass** das Hauptfilterelement (3) als Faltenfilter, insbesondere als Faltenbalg ausgebildet ist.

## Claims

1. Filtering device for filtering air in internal combustion engines, with a replaceable and flame-retardant filter in a filter housing, the filter comprising a main filter element (3) and a fleece prefilter (4) disposed upstream of the main filter element (3) in flow direction, the flame-retardant effect being obtained by the fleece prefilter (4), **characterized in that** the fleece prefilter comprises a synthetic fiber material, noncombustible oxidized polyacrylonitrile fibers (Panox), homogeneously distributed in the fleece, being integrated in the synthetic fiber material.

2. Filtering device according to claim 1, **characterized in that** a flame-retardant impregnation is applied to the fleece prefilter (4).

3. Filtering device according to claim 2, **characterized in that** the flame-retardant impregnation is applied exclusively to the fleece prefilter (4).

4. Filtering device according to one of the claims 1 to 3, **characterized in that** the fleece prefilter (4) features a grammage between 50 g/m² and 500 g/m², in particular a grammage between 100 g/m² und 200 g/m².

5. Filtering device according to one of the claims 1 to 4, **characterized in that** the main filter element (3) is designed as folded filter, in particular as bellows.

## Revendications

1. Dispositif de filtration destiné à la filtration d'air dans des moteurs à combustion interne, avec un filtre échangeable et ignifuge monté dans un boîtier de filtre, le filtre comprenant un élément de filtre principal (3) et un support non-tissé (4) monté dans le sens du flux en amont de élément de filtre principal (3), l'effet ignifuge étant obtenu grâce au support non-tissé (4), **caractérisé en ce que** le support non-tissé comprend un matériau fibreux synthétique, des fibres en polyacrylnitrile (Panox) réparties de manière homogène dans le non-tissé, oxydées et inflammables étant intégrées à ce matériau fibreux synthétique.

2. Dispositif de filtration selon la revendication 1, **caractérisé en ce qu'**une imprégnation ignifuge est appliquée sur le support non-tissé (4).

3. Dispositif de filtration selon la revendication 2, **caractérisé en ce que** l'imprégnation ignifuge est appliquée exclusivement sur le support non-tissé (4).

4. Dispositif de filtration selon l'une des revendications 1 à 3, **caractérisé en ce que** le support non-tissé (4) a un grammage compris entre 50 g/m² et 500 g/m², en particulier un grammage compris entre 100 g/m² et 200 g/m².

5. Dispositif de filtration selon l'une des revendications 1 à 4, **caractérisé en ce que** l'élément de filtre principal (3) est exécuté comme filtre à plis, en particulier comme soufflet.
